# EUROPÄISCHE PATENTSCHRIFT

(11) **EP 1 316 707 B1**
(45) Veröffentlichungstag und Bekanntmachung des Hinweises auf die Patenterteilung: **26.01.2011**
(21) Anmeldenummer: 02025774.7
(22) Anmeldetag: 16.11.2002
(51) Int. Cl.: F02D 41/24, F01N 3/023

(54) **Verfahren zum Betrieb eines elektronischen Steuergerätes eines Kraftfahrzeuges**
Method for operating an electronic control device in a vehicle
Procédé pour faire fonctionner un appareil de commande d'un véhicule

(30) Priorität: 01.12.2001 DE 10159069
(43) Veröffentlichungstag der Anmeldung: 04.06.2003
(73) Patentinhaber: Daimler AG, 70327 Stuttgart (DE)
(72) Erfinder: Christner, Bernd, 72584 Huelben (DE); Duvinage, Frank, Dr., 73230 Kirchheim/Teck (DE); Nolte, Arno, 70188 Stuttgart (DE); Paule, Markus, 71404 Korb (DE); Sander, Henning, 71634 Ludwigsburg (DE)
(74) Vertreter: JENSEN & SON

(56) Entgegenhaltungen:
- EP-A- 1 087 114
- DE-A1- 4 108 734
- DE-A1- 19 937 154
- DE-A1- 19 940 669
- FR-A- 2 739 139
- US-A- 4 924 835
- US-A- 5 012 417
- US-A- 6 098 593
- US-B1- 6 282 485
- PATENT ABSTRACTS OF JAPAN Bd. 1997, Nr. 02, 28. Februar 1997 (1997-02-28) & JP 08 284638 A (TOYOTA AUTOM LOOM WORKS LTD), 29. Oktober 1996 (1996-10-29)

## Beschreibung

Die vorliegende Erfindung betrifft ein Verfahren zum Betrieb eines elektronischen Steuergeräts eines Kraftfahrzeuges mit den Merkmalen des Oberbegriffs des Anspruchs 1.

Der Betrieb moderner Kraftfahrzeuge bzw. von Motoren zu deren Antrieb wird üblicherweise von einem elektronischen Steuergerät gesteuert. Das Steuergerät erhält zu diesem Zweck eine Vielzahl von Eingangssignalen, welche meist von zugehörigen Sensoren geliefert werden. Diese Signale werden im Steuergerät weiterverarbeitet. Abhängig vom Ergebnis dieser Signalverarbeitung werden Ausgangssignale erzeugt, welche den Betrieb des Kraftfahrzeuges und/oder des zugehörigen Motors beeinflussen. Typische Ausgangssignale sind Steuersignale, welche den Fahrzustand des Kraftfahrzeuges oder die Kraftstoffeinspritzung betreffen und z.B. die Drehzahl bzw. die abgegebene Leistung des Motors beeinflussen. Für die Zuverlässigkeit und die Qualität des Betriebs des Kraftfahrzeuges bzw. des Motors ist es wichtig, dass das Steuergerät im Sinne einer zuverlässigen und genauen Signalverarbeitung betrieben wird.

① Aus der JP 08284638 ist ein Verfahren zur Ermittlung einer Partikelfilter beladung durch Auswertung eines Differenzdrucksignals und eines Drehzahlsignals bekannt.

Aufgabe der Erfindung ist es daher, ein Verfahren zum verbesserten Betrieb eines elektronischen Steuergerätes eines Kraftfahrzeuges und/oder eines Kraftfahrzeugmotors zur Verfügung zu stellen.

Diese Aufgabe wird erfindungsgemäß durch ein Verfahren mit den Merkmalen des Anspruchs 1 gelöst.

Erfindungsgemäß umfasst die Signalverarbeitung des Steuergerätes eine Filterung, wobei die Filterung in Abhängigkeit vom Betriebszustand des Kraftfahrzeuges und/oder des Motors vorgenommen wird. Das heißt, dass erfindungsgemäß in Abhängigkeit vom Betriebszustand des Kraftfahrzeuges und/oder des Motors entschieden wird, ob für ein bestimmtes Signal eine Filterung vorgenommen werden soll oder nicht. Ist z.B. bekannt oder muß befürchtet werden, dass ein Betriebsparameter des Motors wie z.B. die Motordrehzahl innerhalb eines bestimmten Wertebereiches ein Signal, wie z.B. das Signal eines Sensors, störend beeinflusst, so kann für dieses Signal eine Signalfilterung vorgesehen werden, die dann aktiviert wird, wenn der entsprechende Motorbetriebsparameter sich in diesem Wertebereich befindet. Da die Filterung mit einem Informationsverlust oder einem Empfindlichkeitsverlust verbunden sein kann, ist es vorteilhaft, bei Verlassen des kritischen Wertebereiches und damit bei Wegfall der Störung auf die Signalfilterung zu verzichten und somit wieder das ungefilterte Signal zu verarbeiten. Besonders vorteilhaft ist es, im Steuergerät eine Beeinflussungsmöglichkeit für die Art der Filterung oder für die Kennwerte, welche die Filterung charakterisieren, vorzusehen. Durch diese Maßnahme kann in vorteilhafter Weise die Signalverarbeitung auf die Dynamik der jeweiligen Betriebs-zustände angepasst werden. So ändern sich beispielsweise den Betrieb eines Verbrennungsmotors kennzeichnende Größen wie Drehzahl, Kraftstoffeinspritzbedingungen, Drehmoment oder Saugrohrunterdruck bei einem Leerlaufbetrieb vergleichsweise langsam, während sie sich bei Beschleunigungsvorgängen des zugehörigen Kraftfahrzeuges vergleichsweise schnell ändern. Vergleichbares gilt für die Änderung von Größen, welche den Betriebszustand des gesamten Kraftfahrzeuges bestimmen. Je nach Betriebszustand des Kraftfahrzeuges können diese Größen wie z.B. die Fahrgeschwindigkeit, der Druck des Kraftstoffes im Versorgungssystem oder dergleichen, mehr oder weniger schnell veränderlich sein. Durch eine auf den Betriebszustand angepasste Filterung bei der Signalverarbeitung kann der Betrieb des Kraftfahrzeuges und/oder des Motors jederzeit optimal gesteuert werden. Die Filterung wird hierzu an einem zweckmäßig gewählten Punkt des Signalwegs vorgenommen. Beispielsweise kann die Filterung direkt bei dem im Steuergerät eintreffenden Eingangssignal vorgenommen werden, oder nach einer Verknüpfungsoperation von mehreren Signalen. Dabei soll im Sinne der Erfindung hier unter einer Filterung ganz allgemein die gezielte Beeinflussung des Amplitudenspektrums eines Signals verstanden werden. Je nach Art des Signals können mit der Filterung verschiedene Vorteile oder Ziele bezweckt werden. Beispielweise kann die Entfernung, das Ausblenden oder die Reduzierung störender oder fremder Frequenzanteile des Signals wie z.B. Rauschen, Störspitzen oder dergleichen angestrebt werden, oder im Falle eines Ausgangssignals des Motorsteuergerätes die Dynamik des Signals an die Trägheit des damit angesteuerten Bauteiles angepasst werden.

In Ausgestaltung der Erfindung umfasst die Filterung eine Tiefpass-Filterung. Durch eine Tiefpass-Filterung kann insbesondere die Glättung eines Signals bzw. die Entfernung unerwünschter Störspitzen erreicht werden, wodurch eine zuverlässigere und genauere Steuerung des Kraftfahrzeug- bzw. Motorbetriebs ermöglicht wird. Bevorzugt werden höhere Frequenzanteile eines Signals dann durch die Tiefpass-Filterung entfernt oder abgeschwächt, wenn durch das Signal auf Grund des aktuellen Betriebszustandes des Kraftfahrzeuges oder des Motors langsam veränderliche Vorgänge erfasst oder gesteuert werden. Wird durch einen Wechsel des Betriebszustandes der entsprechende Vorgang schneller veränderlich, so kann z.B. durch eine Verringerung der Dämpfung oder anderer Kennwerte der Tiefpass-Filterung darauf reagiert werden, so dass dann die schnell veränderlichen Größen in ihrem zeitlichen Verlauf sicher erfasst werden können.

In weiterer Ausgestaltung der Erfindung wird eine der Tiefpass-Filterung zugeordnete Eckfrequenz und/oder Dämpfung in Abhängigkeit vom Betriebszustand der Brennkraftmaschine gewählt. Als Eckfrequenz ist hier wie üblich die Frequenz zu verstehen, oberhalb der eine Dämpfung idealerweise wirksam wird oder sich entsprechend der Filtercharakteristik verändert. Wird zum Beispiel im Falle einer Tiefpass-Filterung ein Verzögerungsglied erster Ordnung zur Glättung eines Signals eingesetzt, so kann je nach Dynamik des aktuellen Kraftfahrzeugoder Motorbetriebes die Eckfrequenz erhöht oder erniedrigt werden und damit der Frequenzbereich in welchem die Signalglättung erfolgt, den aktuellen Gegebenheiten angepasst werden. Analog kann durch Umschaltung auf eine andere Art der Signalfilterung in Abhängigkeit des Kraftfahrzeug- oder Motorbetriebszustandes die Stärke der Dämpfung in einem bestimmten Frequenzbereich nach Bedarf vergrößert oder verkleinert werden.

In weiterer Ausgestaltung der Erfindung wird die Filterung bei einer Ermittlung und/oder Verarbeitung einer Kenngröße vorgenommen, welche einer Abgasreinigungseinrichtung des Kraftfahrzeuges zugeordnet ist. Aufgrund verschärfter Schadstoffgrenzwerte kommt der optimalen Funktionsfähigkeit von Abgasreinigungseinrichtungen eine besondere Bedeutung zu. Abgasreinigungseinrichtungen von Kraftfahrzeugen mit Verbrennungsmotoren verfügen häufig über sensible, störanfällige oder empfindliche Sensoren, deren Signale bestmöglich aufbereitet und situationsgerecht verarbeitet werden müssen, damit die geforderte Qualität der Abgasreinigung erreicht wird. Beispielhaft sei hier die Frequenz- und Amplituden-Steuerung/Regelung des Luft-Kraftstoffverhältnisses bei Ottomotoren genannt, welche mit sogenannten 3-Wege-Katalysatoren ausgerüstet sind. Mit sogenannten Lambdasonden in der Abgasreinigungsanlage wird in diesem Fall das Luft-Kraftstoffverhältnis des Abgases erfasst und die Verbrennung vom Motorsteuergerät gesteuert bzw. geregelt. Die Zuverlässigkeit bei der Signalverarbeitung, insbesondere von schwachen oder störanfälligen Signalen, ist hier für die bestmögliche Abgasreinigung von großer Wichtigkeit. Ein weiteres Beispiel ist der Betrieb von sogenannten Stickoxid-Speicherkatalysatoren, welche durch einen Wechsel von einer mageren zu einer fetten Verbrennung von Zeit zu Zeit regeneriert werden müssen. Die optimale Steuerung dieses Vorganges erfordert eine einwandfreie Signalaufbereitung, die vorteilhafterweise durch eine betriebszustandsabhängige Filterung im Rahmen der Signalverarbeitung des Motorsteuergerätes erreicht wird.

In weiterer Ausgestaltung der Erfindung wird die Filterung bei der Ermittlung und/oder Verarbeitung einer Größe vorgenommen, welche einer Beladung eines Partikelfilters zugeordnet ist, welcher in einer Abgasreinigungseinrichtung eines insbesondere als selbstzündende Brennkraftmaschine ausgebildeten Motors eines Kraftfahrzeuges angeordnet ist. Insbesondere als selbstzündene Brennkraftmaschine bzw. als Dieselmotor ausgeführte Motoren von Kraftfahrzeugen können mit einem Partikelfilter in der Abgasreinigungseinrichtung zur Verminderung der Partikelemission ausgestattet sein. Durch Ansammlung von Partikeln steigt die Partikelbeladung dieser Filter im Laufe der Zeit an, so dass diese Filter in wiederkehrenden Intervallen, vorzugsweise durch Abbrennen der gesammelten Rußpartikel, regeneriert werden. Typischerweise wird die Beladung auf der Basis einer Druckmessung oder Differenzdruckmessung laufend ermittelt. Dabei wird das von einem Drucksensor gelieferte Signal an das Steuergerät übertragen und dort meist durch Verknüpfung mit anderen berechneten oder anderweitig ermittelten Signalen, wie Abgastemperatur, Luftdurchsatz, Kraftstoffdurchsatz, Drehzahl und dergleichen, die aktuelle Beladung des Partikelfilters ermittelt. Die erfindungsgemäße Filterung von Signalen bei der Ermittlung der Partikelfilterbeladung in Abhängigkeit vom Betriebszustand der Brennkraftmaschine verbessert in besonders vorteilhafter Weise die Genauigkeit des ermittelten Beladungswertes. Damit kann einerseits der langsam veränderliche Vorgang der zunehmenden Partikelfilterbeladung zuverlässig verfolgt werden. Andererseits kann der sich während der Partikelfilterregeneration relativ schnell ändernde Beladungswert genauer ermittelt werden. Dies verbessert die Erkennung der Notwendigkeit einer Partikelfilterregeneration und die Überwachung des Regenerationsvorganges und verbessert somit den Brennkraftmaschinenbetrieb insgesamt.

In weiterer Ausgestaltung des erfindungsgemäßen Verfahrens wird bei einem Betriebszustand des Kraftfahrzeuges und/oder der Brennkraftmaschine, welcher einer aktiven Regeneration des Partikelfilters zugeordnet ist, die Filterung bei der Ermittlung und/oder Verarbeitung der Partikelfilter-Beladungsgröße mit einer größeren Eckfrequenz und/oder einer kleineren Dämpfung vorgenommen als bei einem Betriebszustand des Kraftfahrzeuges und/oder der Brennkraftmaschine, welcher einer Beladung des Partikelfilters zugeordnet ist. Mit dieser Maßnahme wird die Zuverlässigkeit der Auswertung des Drucksignals zur Ermittlung der Partikelfilterbeladung während der Regeneration des Partikelfilters verbessert, bei der sich die Beladung des Partikelfilters rasch vermindert. Ist die Partikelfilterregeneration und der zugehörige Betriebszustand der Brennkraftmaschine beendet, erfolgt wieder eine sich langsam verändernde Partikelfilterbeladung, und die oben erwähnte Maßnahme wird rückgängig gemacht, d.h. die Eckfrequenz der Signalfilterung wird bei Betriebszuständen, bei denen eine Partikelfilterbeladung erfolgt, wieder verkleinert und/oder die Dämpfung wird wieder vergrößert. Damit wird die der Partikelfilterbeladung zugeordnete Größe wieder stärker geglättet, was deren zuverlässige Interpretation gewährleistet.

Im Folgenden wird die Erfindung anhand einer Zeichnung und eines zugehörigen Beispieles näher erläutert.

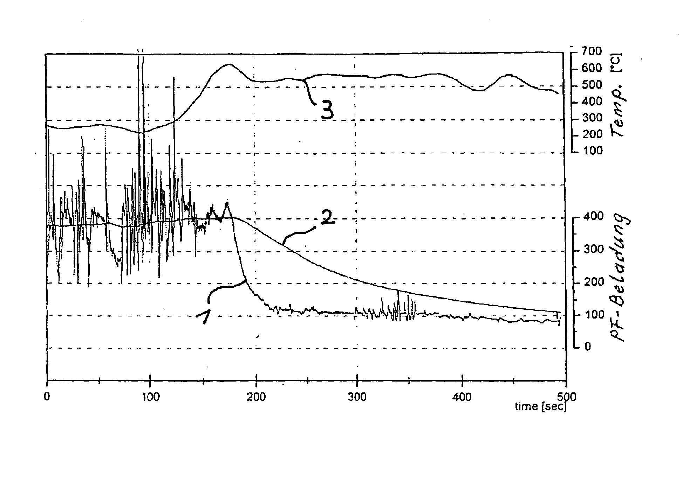

Die einzige Figur zeigt schematisch den zeitlichen Verlauf verschiedener Größen bzw. Signale während der Beladung und der Regeneration eines Partikelfilters.

Im Diagramm der Figur ist als Kurve 1 der zeitliche Verlauf der Beladung des Partikelfilters dargestellt, wie er nach Durchführung einer Filterung mit geringer Dämpfung erhalten wird. Kurve 2 zeigt den Verlauf derselben Größe, jedoch nach Filterung durch ein Filter mit starker Dämpfung. Kurve 3 zeigt den parallel vorhandenen Verlauf der Temperatur des zugehörigen Partikelfilters. Die Zuordnung der entsprechenden Skalierung ist am rechten Rand des Diagramms eingezeichnet, für die Partikelfilterbeladungsgröße in normierten, dimensionslosen Einheiten. Die Ermittlung der Beladung des Partikelfilters erfolgt im Motorsteuergerät auf der Basis von Sensorsignalwerten, welche ebenfalls dem Motorsteuergerät zugeführt werden. Die wesentlichen Größen sind hierbei die Messwerte eines Differenzdrucksensors, welcher den in Folge des Strömungswiderstandes des Partikelfilters aufgebauten Differenzdruck erfasst, und weitere Sensorsignale für die Drehzahl und den Luft- und Kraftstoffdurchsatz. Die genaue Art der Berechnung ist hier nicht vorrangig von Interesse, weshalb auf die Darstellung von Einzelheiten hierzu verzichtet wird.

Im Bereich zeitlich vor dem Abszissenwert von 150 s erfolgte eine kontinuierlich zunehmende Beladung des Partikelfilters mit den Partikeln des Abgases eines Dieselmotors bei normalem, etwa zehnstündigen gemischten Fahrbetrieb des zugehörigen Kraftfahrzeuges. Bei etwa 150 s wird eine aktive Regeneration des beladenen Partikelfilters eingeleitet. Diese besteht hauptsächlich darin, dass die Temperatur des Abgases durch verschiedene Maßnahmen, wie z.B. späte Nacheineinspritzung von Kraftstoff, angehoben wird. Infolgedessen steigt die Partikelfiltertemperatur gemäß der Kurve 3 an. Bei einem Abszissenwert von etwa 170 s setzt die Regeneration des Partikelfilters ein (Partikelfiltertemperatur ca. 600 °C) durch Abbrand der angesammelten Rußpartikel ein und der ermittelte Beladungswert geht gemäß der Kurve 1 rasch zurück.

Im Falle der Kurve 1 wird der berechnete Wert für die Partikelfilterbeladung einer Filterung mit einem Verzögerungsglied erster Ordnung (VZ1-Glied) unterzogen, welches eine Eckfrequenz von etwa 1o Hz aufweist. Gemäß entsprechender Untersuchungen wird der Rückgang der Partikelfilterbeladung während der Regeneration im Zeitbereich 150 s bis 250 s durch die Kurve 1 richtig und zuverlässig wiedergegeben. Bei dieser Art des Brennkraftmaschinenbetriebs mit relativ schnell veränderlicher Partikelfilterbeladung erweist sich die vorgenommene Dämpfung des Beladungswertes als befriedigend. Im Zeitbereich vor 150 s, während der Beladung des Partikelfilters, ist der errechnete Wert für die Partikelfilterbeladung gemäß der Kurve 1 jedoch ersichtlich unruhig und starken Schwankungen unterworfen. Es treten hier unrealistische, steile Spitzen im Wert für die Partikelfilterbeladung auf. Die vorgenommene Dämpfung der Partikelfilterbeladung erweist sich hier als zu gering. Die Einleitung einer Partikelfilterregeneration aufgrund einer einzelnen Überschreitung eines festgesetzten Beladungsschwellwertes würde hier zu einer verfrühten Auslösung der Partikelfilterregeneration führen und den Brennkraftmaschinenbetrieb in unerwünschter Weise stören.

Die Verhältnisse bei der Beladung des Partikelfilters werden bedeutend besser wiedergegeben, wenn der errechnete Wert einer Filterung mit einem VZ1-Glied unterzogen wird, welches eine Eckfrequenz von deutlich weniger als 1 Hz aufweist. Signalanteile mit einer größeren Frequenz werden hier entsprechend stärker gedämpft. Der dadurch erhaltene Verlauf der Partikelfilterbeladung wird durch die Kurve 2 wiedergegeben. Hier ergibt sich ein plausibler und richtiger, langsam ansteigender und stetiger Verlauf für die Partikelfilterbeladung. Nach Einsetzen der aktiven Partikelfilterregeneration sinkt der durch Kurve 2 wiedergegebene, stark gedämpfte Wert für die Partikelfilterbeladung allerdings nur sehr langsam ab. Auf Grund der sehr niedrigen Eckfrequenz bei der Filterung wird der errechnete Wert für die Partikelfilterbeladung bei diesem Betriebszustand der Brennkraftmaschine unrichtig wiedergegeben. Die tatsächliche Änderung der Partikelfilterbeladung erfolgt in einer kürzeren Zeitspanne als sie der Zeitkonstante des VZ1-Gliedes entspricht. Das so gefilterte Signal für die Partikelfilterbeladung kann daher der raschen tatsächlichen Änderung nicht folgen, weshalb deren Wert verfälscht wiedergegeben wird. Die Beendigung der Filterregeneration auf der Basis einer solcherart ermittelten Partikelfilterbeladung hat dementsprechend eine unnötige und unerwünschte Verlängerung des Regenerationsvorganges zur Folge und stört somit ebenfalls den Brennkraftmaschinenbetrieb.

Um die tatsächlichen Verhältnisse sicher und zuverlässig zu erfassen, wird erfindungsgemäß das Steuergerät so betrieben, dass eine Filterung für die berechnete Partikelfilterbeladung vorgenommen wird, welche vom Betriebszustand des Kraftfahrzeuges bzw. der Brennkraftmaschine abhängt. Hierbei wird zweckmäßig ein Sensorsignal herangezogen, welches repräsentativ für den Betriebszustand des Kraftfahrzeuges bzw. der Brennkraftmaschine ist. Zur Erkennung des Brennkraftmaschinenbetriebszustandes kann dies z.B. das Signal eines Motordrehzahlsensors, das Signal eines Sensors für die Brennkraftmaschinenlast, den Saugrohrunterdruck, das Motordrehmoment oder den Kraftstoffeinspritzdruck sein. Weitere Beispiele sind Sensoren für Beschleunigung und Verzögerung oder Raddrehzahlsensoren. Zur Erkennung des Kraftfahrzeugbetriebs-zustandes kommt z.B. die Fahrgeschwindigkeit, die Kühlmitteltemperatur oder eine Temperatur der Abgasreinigungseinrichtung in Frage. Ist die Brennkraftmaschine in einem normalen Fahrbetrieb, bei dem eine kontinuierliche Beladung des Partikelfilters erfolgt, so wird das der Partikelfilterbeladung zugeordnete Signal einer starken Dämpfung unterzogen. Vorzugsweise wird hierzu ein VZ1-Glied als elektrisches Signalfilter eingesetzt, welches eine sehr niedrige Eckfrequenz von beispielsweise 0,1 Hz aufweist. Ab dieser Eckfrequenz werden Signalanteile mit einer höheren Frequenz einer Dämpfung von 20 db je Oktave unterzogen. Signalanteile höherer Frequenz, welche insbesondere durch Addition zufälliger Schwankungen auftreten können, werden dadurch unterdrückt und der Verlauf des Partikelfilterbeladungswertes geglättet. Es versteht sich, dass das Steuergerät auch so betrieben werden kann, dass nicht der Wert für die Partikelfilterbeladung nach seiner Berechnung gefiltert wird, sondern die zugrunde liegenden Eingangssignale gefiltert werden. Außerdem versteht sich, dass die Tiefpass-Filterung auch durch ein Verzögerungsglied höherer Ordnung (VZn-Glied mit n > 1) durchgeführt werden kann. Dabei können die entsprechenden Eckfrequenzen geeignet gewählt werden. Desgleichen können an Stelle von VZn-Gliedern andere Dämpfungsglieder, Tiefpässe oder Filter wie Bessel- oder Butterworth-Filter eingesetzt werden.

Erreicht der Wert für die Partikelfilterbeladung eine vorgegebene Grenze, so wird der Brennkraftmaschinenbetrieb für die Einleitung bzw. die Durchführung der Partikelfilterregeneration umgestellt. Gleichzeitig wird erfindungsgemäß die Dämpfung des errechneten Signals für die Partikelfilterbeladung vermindert. Vorzugsweise geschieht dies durch eine Erhöhung der Eckfrequenz des VZ1-Gliedes auf beispielsweise 10 Hz. Ist die Regeneration des Partikelfilters abgeschlossen, was z.B. nach Ablauf einer vorbestimmten Zeitdauer oder nach Erreichen eines vorbestimmten Mindestwertes für die Partikelfilterbeladung der Fall ist, kann wieder auf einen normalen Brennkraftmaschinenbetrieb und auf eine stärkere Signaldämpfung umgeschaltet werden.

Durch die in Abhängigkeit des Brennkraftmaschinenbetriebes vorgenommene Filterung des Signals für die Partikelbeladung werden wie beschrieben die tatsächlichen Verhältnisse zuverlässig und richtig wiedergegeben, weshalb der Brennkraftmaschinenbetrieb insgesamt besonders zuverlässig erfolgt.

Die erfindungsgemäße Maßnahme, bei der Verarbeitung von Signalen durch ein elektronisches Steuergerät eine vom Kraftfahrzeugbetrieb und/oder Motorbetrieb abhängige Filterung vorzunehmen, ist selbstverständlich nicht auf die hier beispielhaft im Zusammenhang mit der Beladungsermittlung eines Partikelfilters genannten Signale beschränkt. Vielmehr lässt sich diese Maßnahme auch auf andere Größen anwenden, vorzugsweise wenn diese eine vom Betrieb der Brennkraftmaschine stark abhängige Dynamik aufweisen. Beispielsweise kommen hier Größen in Frage, welche im Zusammenhang mit der Kraftstoffeinspritzung, der Einstellung von Zündzeitpunkten, der Verbrennungssteuerung, der Abgasrückführung oder allgemein im Zusammenhang mit dem Motorbetrieb von Bedeutung sind. Die Beeinflussung der Signal-Filterung in Abhängigkeit vom jeweiligen Betriebszustand des Kraftfahrzeuges und/oder des Motors kann dabei kontinuierlich oder gestuft erfolgen. Besonders vorteilhaft ist in diesem Zusammenhang, wie erläutert, die Durchführung einer Tiefpassfilterung. Es können aber auch andere Arten der Signalfilterung vorteilhaft sein. Als Beispiel sei hier der betriebszustandsabhängige Einsatz eines Bandfilters genannt, mit welchem beispielsweise in bestimmten Betriebszuständen des Kraftfahrzeuges und/oder des Motors auftretende Brumm- oder Rumpelstörungen von Signalen nach Bedarf ausgefiltert werden. Je nachdem, ob vom der elektronischen Steuergerät analoge oder digitale Signale verarbeitet werden, können für die Signalfilterung entsprechend geeignete analoge oder digitale Signalfilter eingesetzt werden.

## Patentansprüche

1. Verfahren zur Ermittlung einer Beladung eines in einer Abgasreinigungseinrichtung einer Kraftfahrzeug-Brennkraftmaschine angeordneten Partikelfilters, bei welchem eine Ermittlung und/oder Verarbeitung einer der Beladung des Partikelfilters zugeordneten Größe vorgenommen wird,
**dadurch gekennzeichnet, dass**
bei der Ermittlung und/oder Verarbeitung der Größe eine Signalfilterung vorgenommen wird, wobei eine der Signalfilterung zugeordnete Eckfrequenz und/oder Dämpfung in Abhängigkeit vom Betriebszustand des Kraftfahrzeugs und/oder der Brennkraftmaschine gewählt wird.

2. Verfahren nach Anspruch 1,
**dadurch gekennzeichnet, dass**
die Signalfilterung eine Tiefpassfilterung umfasst.

3. Verfahren nach Anspruch 1 oder 2,
**dadurch gekennzeichnet, dass**
bei einem Betriebszustand des Kraftfahrzeuges und/oder der Brennkraftmaschine, welcher einer aktiven Regeneration des Partikelfilters zugeordnet ist, die Signalfilterung bei der Ermittlung und/oder Verarbeitung der Partikelfilter-Beladungsgröße mit einer größeren Eckfrequenz und/oder einer kleineren Dämpfung vorgenommen wird als bei einem Betriebszustand des Kraftfahrzeuges und/oder der Brennkraftmaschine, welcher einer Beladung des Partikelfilters zugeordnet ist.

4. Verfahren nach Anspruch 3,
**dadurch gekennzeichnet, dass**
bei einem Betriebszustand des Kraftfahrzeuges und/oder der Brennkraftmaschine, welcher einer aktiven Regeneration des Partikelfilters zugeordnet ist, eine Tiefpass-Signalfilterung mit einer Eckfrequenz von etwa 1o Hertz vorgenommen wird.

5. Verfahren nach Anspruch 3 oder 4,
**dadurch gekennzeichnet, dass**
bei einem Betriebszustand des Kraftfahrzeuges und/oder der Brennkraftmaschine, welcher einer Beladung des Partikelfilters zugeordnet ist, eine Tiefpass-Signalfilterung mit einer Eckfrequenz von etwa 1 Hertz vorgenommen wird.

6. Verfahren nach einem der Ansprüche 1 bis 5,
**dadurch gekennzeichnet, dass**
die Ermittlung der Beladung des Partikelfilters auf der Basis einer Druckmessung oder einer Differenzdruckmessung vorgenommen wird.

7. Verfahren nach Anspruch 6,
**dadurch gekennzeichnet, dass**
zur Ermittlung der Beladung des Partikelfilters ein von einem Drucksensor geliefertes Signal mit einem Signal für eine Abgastemperatur, einem Luftdurchsatz, einem Kraftstoffdurchsatz oder einer Drehzahl verknüpft wird.

## Claims

1. Method for determining the loading of a particulate filter provided in an exhaust emission control device of the internal combustion engine of a motor vehicle, wherein a variable assigned to the loading of the particulate filter is determined and/or processed,
**characterised in that**
a signal filtering operation is performed in the determination and/or processing of the variable, wherein a corner frequency or attenuation assigned to the signal filtering operation is chosen in dependence on the operating state of the motor vehicle and/or of the internal combustion engine.

2. Method according to claim 1,
**characterised in that**
the signal filtering operation includes a low-pass filtering operation.

3. Method according to claim 1 or 2,
**characterised in that**
in an operating state of the motor vehicle and/or the internal combustion engine which is assigned to an active regeneration of the particulate filter, the signal filtering operation involved in the determination and/or processing of the particulate filter loading value is performed at a higher corner frequency and/or a lower attenuation than in an operating state of the motor vehicle and/or the internal combustion engine which is assigned to a loading of the particulate filter.

4. Method according to claim 3,
**characterised in that**
in an operating state of the motor vehicle and/or the internal combustion engine which is assigned to an active regeneration of the particulate filter, a low-pass signal filtering operation is performed at a corner frequency of approximately 10 Hertz.

5. Method according to claim 3 or 4,
**characterised in that**
in an operating state of the motor vehicle and/or the internal combustion engine which is assigned to a loading of the particulate filter, a low-pass signal filtering operation is performed at a corner frequency of approximately 1 Hertz.

6. Method according to any of claims 1 to 5,
**characterised in that**
the loading of the particulate filter is determined on the basis of a pressure measurement or a differential pressure measurement.

7. Method according to claim 6,
**characterised in that**
for the determination of the loading of the particulate filter, a signal provided by a pressure sensor is interlinked with a signal for an exhaust gas temperature, an air throughput, a fuel throughput or a speed.

## Revendications

1. Procédé pour déterminer une charge d'un filtre à particules disposé dans un dispositif d'épuration de gaz d'échappement d'un moteur à combustion interne de véhicule, selon lequel une détermination et / ou un traitement d'une grandeur associée à la charge du filtre à particules est effectué(e), **caractérisé en ce que** lors de la détermination et / ou du traitement de la grandeur un filtrage de signal est effectué, une fréquence de coupure associée au filtrage de signal et / ou une atténuation en fonction de l'état de fonctionnement du véhicule et / ou du moteur à combustion interne est sélectionné.

2. Procédé selon la revendication 1, **caractérisé en ce que** le filtrage de signal comprend un filtrage passe-bas.

3. Procédé selon la revendication 1 ou 2, **caractérisé en ce que** pour un état de fonctionnement du véhicule et / ou du moteur à combustion interne auquel est associée une régénération active du filtre à particules, le filtrage de signal lors de la détermination et / ou du traitement de la grandeur de charge du filtre à particules est effectué avec une fréquence de coupure plus grande et / ou une atténuation plus petite que pour un état de fonctionnement du véhicule et / ou du moteur à combustion interne auquel est associée une charge du filtre à particules.

4. Procédé selon la revendication 3, **caractérisé en ce que** pour un état de fonctionnement du véhicule et / ou du moteur à combustion interne, auquel est associée une régénération active du filtre à particules, un filtrage de signal de passe-bas est effectué avec une fréquence de coupure d'environ 10 Hertz.

5. Procédé selon la revendication 3 ou 4, **caractérisé en ce que** pour un état de fonctionnement du véhicule et / ou du moteur à combustion interne auquel est associée une charge du filtre à particules, un filtrage de signal passe-bas est effectué avec une fréquence de coupure d'environ 1 hertz.

6. Procédé selon l'une quelconque des revendications 1 à 5, **caractérisé en ce que** la détermination de la charge du filtre à particules est effectuée sur la base d'une mesure de pression ou une mesure de pression différentielle.

7. Procédé selon la revendication 6, **caractérisé en ce que** pour déterminer la charge du filtre à particules un signal fourni par un capteur de pression est lié à un signal pour une température du gaz d'échappement, à un débit d'air, à un débit de carburant ou à un régime.
